(19) Europäisches Patentamt European Patent Office Office européen des brevets

(11) EP 3 473 887 A2

(12) **EUROPEAN PATENT APPLICATION**

(43) Date of publication:
24.04.2019 Bulletin 2019/17

(51) Int Cl.:
*F16H 1/46* (2006.01)

(21) Application number: 18200999.3

(22) Date of filing: 17.10.2018

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: 18.10.2017 JP 2017201637

(71) Applicant: **TOYOTA JIDOSHA KABUSHIKI KAISHA**
**Toyota-shi, Aichi-ken, 471-8571 (JP)**

(72) Inventor: **ISONO, Hiroshi**
**Toyota-shi, Aichi-ken,, 471-8571 (JP)**

(74) Representative: **Kuhnen & Wacker**
**Patent- und Rechtsanwaltsbüro PartG mbB**
**Prinz-Ludwig-Straße 40A**
**85354 Freising (DE)**

(54) **COMPOUND PLANETARY GEAR ASSEMBLY**

(57)     A compound planetary gear assembly (15) that can be manufactured at a low cost. The compound planetary gear assembly (15) comprises: a first sun gear (24) to which torque is applied; a second sun gear (29) arranged fixedly and coaxially with the first sun gear (24); a third sun gear (42) rotating around an axis of the first sun gear (24); a first planetary gear (25) to which the torque is delivered from the first sun gear (24); a second planetary gear (26) delivering the torque to the second sun gear (29); a third planetary gear (39) delivering the torque to the third sun gear (42); a first pinion shaft (31) supporting the first planetary gear (25), the second planetary gear (29) and the third planetary gear (39); and a carrier (23) supporting the first pinion shaft (31).

Fig. 1

**Description**

**CROSS REFERENCE TO RELATED APPLICATION**

The present invention claims the benefit of Japanese Patent Application No. 2017-201637 filed on October 18, 2017, with the Japanese Patent Office.

**BACKGROUND**

**Field of the Invention**

Embodiments of the present disclosure relate to the art of a compound planetary gear assembly in which two sets of planetary gear units are connected to each other.

**Discussion of the Related Art**

A compound planetary gear assembly is configures to achieve a speed ratio higher than a single planetary gear unit. For example, JP-A-2008-275112 describes a high reduction combined planetary gear mechanism comprising two sets of planetary gear mechanisms respectively having a sun gear, a ring gear, and a plurality of planetary gears interposed between the sun gear and the ring gear. According to the teachings of JP-A-2008-275112, the planetary gear mechanisms are non-axisymmetrically arranged to expand the flexibility in design.
In the combined planetary gear mechanism described in JP-A-2008-275112, the ring gear as an internal gear is formed on an inner peripheral surface of a cylindrical member attached to a tip of a tube. Generally, internal gears are processed by inserting a cutting tool such as a hob into a cylindrical work (or tube). In addition, specifications of teeth of the cutting tool are limited. Thus, it is not easy to manufacture the internal gears and hence a manufacturing cost of the internal gears is higher than that of external gears.

**SUMMARY**

Aspects of embodiments of the present disclosure have been conceived noting the foregoing technical problems, and it is therefore an object of embodiments of the present disclosure to provide a compound planetary gear assembly that can be manufactured at a low cost.
In order to achieve the above-explained objective, according to one aspect of the present disclosure, there is provided a compound planetary gear assembly comprising: a first sun gear to which torque is applied; a second sun gear that is arranged coaxially with the first sun gear and fixed not to rotate; a third sun gear that rotates around a common rotational axis with the first sun gear to output the torque while multiplying or reducing; a first planetary gear to which the torque is delivered from the first sun gear; a second planetary gear that delivers the torque to the second sun gear; a third planetary gear that delivers the torque to the third sun gear; a first pinion shaft that supports the first planetary gear, the second planetary gear and the third planetary gear in such a manner as to rotate integrally; and a carrier that supports the first pinion shaft and that rotates around a rotational axis of the first sun gear.
In a non-limiting embodiment, the carrier may support both ends of the first pinion shaft.
In a non-limiting embodiment, the compound planetary gear assembly may further comprise: a second pinion shaft that is supported by the carrier in a radially inner side of the first pinion shaft; a fourth planetary gear that is supported by the second pinion shaft in a rotatable manner while being meshed with the second planetary gear and the second sun gear; a third pinion shaft that is supported by the carrier in the radially inner side of the first pinion shaft; and a fifth planetary gear that is supported by the third pinion shaft in a rotatable manner while being meshed with the third planetary gear and the third sun gear.
In a non-limiting embodiment, the first planetary gear, the second planetary gear, and the third planetary gear may be integrated to form a long pinion gear.
In a non-limiting embodiment, the compound planetary gear assembly may further comprise a sixth planetary gear meshing with the first sun gear and the first planetary gear. The sixth planetary gear may be supported by a fourth pinion shaft in the radially inner side of the first pinion shaft, and the fourth pinion shaft may be supported by the carrier.
In a non-limiting embodiment, the compound planetary gear assembly may further comprise: a fourth sun gear that is arranged coaxially with the first sun gear to be rotated integrally with the first sun gear; and a sixth pinion gear that is supported by the first pinion shaft to be rotated integrally with the first pinion shaft while being meshed with the fourth sun gear.
According to another aspect of the present disclosure, there is provided a compound planetary gear assembly, comprising: a fifth sun gear to which torque is applied; a sixth sun gear that is arranged coaxially with the fifth sun gear, and that serves as any one of a fixed element which is not allowed to rotate and an output element which outputs the torque while multiplying or reducing; a ring gear that is arranged coaxially with the fifth sun gear to serve as other one of the fixed element and the output element; a seventh planetary gear that is arranged radially outer side of the fifth sun gear; an eighth planetary gear that is arranged radially outer side of the seventh planetary gear to be meshed with the seventh planetary gear; a third carrier member that supports the eighth planetary gear and a ninth planetary gear meshing with the sixth sun gear by a fifth pinion shaft such that the eighth planetary gear and the ninth planetary gear are rotated integrally; a fourth carrier member that supports the seventh planetary gear and a tenth planetary gear meshing with the ring gear by a sixth pinion shaft such that the seventh planetary gear and the tenth planetary gear are rotated integrally; and an intermediate carrier member that supports the fifth pinion shaft and the sixth pinion shaft while offsetting in a radial direction. The fifth sun gear may mesh with the seventh planetary gear or the tenth planetary gear.

In a non-limiting embodiment, the sixth sun gear may serve as the fixed element, the ring gear may serve as the output element, and the fifth sun gear may mesh with the seventh planetary gear.

In a non-limiting embodiment, the sixth sun gear may serve as the fixed element, the ring gear may serve as the output element, and the fifth sun gear may mesh with the tenth planetary gear.

According to the embodiments of the present disclosure, the complex planetary gear unit two sets of the planetary gear sets, and only external gears are used in at least one of the planetary gear sets. In other words, an internal gear is not used in at least one of the planetary gear sets. According to the embodiments of the present disclosure, therefore, a manufacturing cost of the complex planetary gear unit may be reduced. Further, a significantly large reduction ratio may be achieved by the complex planetary gear unit.

## BRIEF DESCRIPTION OF THE DRAWINGS

Features, aspects, and advantages of exemplary embodiments of the present disclosure will become better understood with reference to the following description and accompanying drawings, which should not limit the disclosure in any way.

Fig. 1 is a cross-sectional view schematically showing a cross-section of the compound planetary gear assembly according to a first embodiment of the present disclosure;
Fig. 2 is a table indicating combinations of number of teeth of the gears to achieve desired reduction ratio of the compound planetary gear assembly;
Fig. 3 is a cross-sectional view schematically showing a cross-section of the compound planetary gear assembly according to a second embodiment of the present disclosure;
Fig. 4 is a cross-sectional view schematically showing a cross-section of the compound planetary gear assembly according to a third embodiment of the present disclosure;
Fig. 5 is a cross-sectional view schematically showing a cross-section of the compound planetary gear assembly according to a fourth embodiment of the present disclosure;
Fig. 6 is a cross-sectional view schematically showing a cross-section of the compound planetary gear assembly according to a fifth embodiment of the present disclosure; and
Fig. 7 is a cross-sectional view schematically showing a cross-section of the compound planetary gear assembly according to a sixth embodiment of the present disclosure.

## DETAILED DESCRIPTION OF THE PREFERRED EMBODIMENT(S)

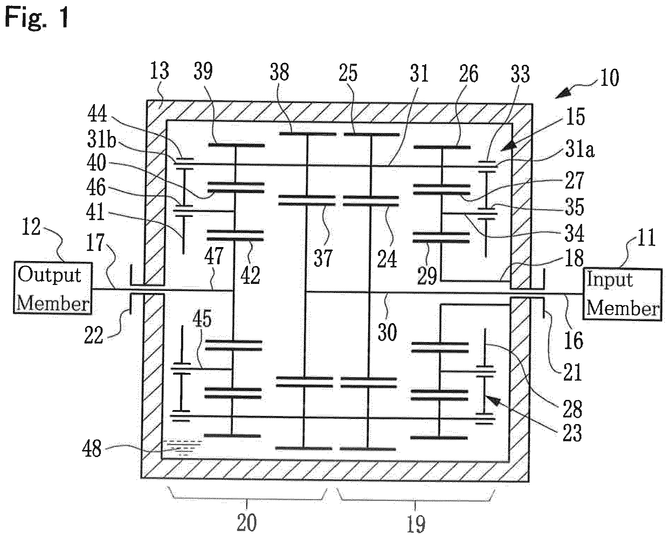

Preferred embodiments of the present disclosure will now be explained with reference to the accompanying drawings. Referring now to Fig. 1, there is shown a cross-section of a geared transmission 10 using a compound planetary gear assembly according to the first embodiment. According to the First embodiment shown in Fig. 1, the geared transmission unit 10 is used as a speed reducing gear unit. However, the geared transmission unit 10 may also be used as a speed increasing gear unit by applying torque to an after-mentioned output member. For example, the geared transmission unit 10 thus serving as a speed reducing gear unit may be connected to an in-wheel motor of an electric vehicle.

The geared transmission unit 10 comprises an input member 11 as a prime mover, an output member 12 as a wheel hub, a housing 13, and a compound planetary gear assembly 15. For example, an electric motor may be employed as the prime mover. Torque of the input member 11 is transmitted to the output member 12 while being multiplied.

The compound planetary gear assembly 15 comprises an input shaft 16, an output shaft 17, a fixed shaft 18, a first planetary gear set 19, and a second planetary gear set 20. The first planetary gear set 19 and the second planetary gear set 20 are arranged coaxially in the housing 13. In order to transmit the torque of the input member 11 to the first planetary gear set 19, the input shaft 16 extends along a rotational center axis of the first planetary gear set 19 while being supported in a rotatable manner by the housing 13 through a first bearing 21. In order to deliver the torque of to the output member 12, the output shaft 17 extends along a rotational center axis of the second planetary gear set 20 while being supported in a rotatable manner by the housing 13 through a second bearing 22.

The first planetary gear set 19 comprises a first sun gear 24, at least one first planetary gear 25, at least one second planetary gear 26, at least one fourth planetary gear 27, a second sun gear 29, a fourth sun gear 37, and a first carrier member 28. A first rotary shaft 30 extends along the rotational center axis of the first planetary gear set 19 to be joined to the input shaft 16. The first sun gear 24 as an external gear is formed on the first rotary shaft 30 to be rotated integrally with the first rotary shaft 30.

The first planetary gear 25 as an external gear is fitted onto a first pinion shaft 31 extending parallel to the first rotary shaft 30 while being meshed with the first sun gear 24. The second planetary gear 26 is also fitted onto the first pinion shaft 31 in an outer side of the second sun gear 29. That is, the first planetary gear 25 and the second planetary gear 26 are rotated integrally with the first pinon shaft 31. For example, if the first pinion shaft 31 is allowed to rotate, the first planetary gear 25 and the second planetary gear 26 may be fitted fixedly onto the first pinion shaft 31. Optionally, the first planetary gear 25 and the second planetary gear 26 may be formed integrally. In this case, the first planetary gear 25 and the second planetary gear 26 may be fitted onto the first pinon shaft 31 through a bearing.

One end 31a of the first pinion shaft 31 is supported by a first supporting section 33 of the first carrier member 28. The first carrier member 28 is a plate member that is rotated around the input shaft 16 or the first rotary shaft 30, and the first supporting section 33 is formed on an outer circumferential portion of the first carrier member 28. The first pinion shaft 31 may be supported by the first supporting section 33 in a rotatable manner. However, if the first planetary gear 25 and the second planetary gear 26 are fitted onto the first pinon shaft 31 in a rotatable manner, the first pinion shaft 31 may also be joined fixedly to the first supporting section 33. The first carrier member 28 also supports a second pinion shaft 34, and the fourth planetary gear 27 is fitted onto the second pinion shaft 34. That is, the fourth planetary gear 27 is interposed between the second sun gear 29 and the second planetary gear 26 while being meshed with those gears. Specifically, the second pinion shaft 34 is supported by a second supporting section 35 of the first carrier member 28 that is formed in an inner circumferential side of the first supporting section 33. The second pinion shaft 34 may be supported by the second supporting section 35 in a rotatable manner. However, if the fourth planetary gear 27 is fitted onto the second pinion shaft 34 in a rotatable manner, the second pinion shaft 34 may also be joined fixedly to the second supporting section 35. The second sun gear 29 is integrated with a fixed shaft (or a sun gear shaft) 18 that is fitted onto the first rotary shaft 30 and fixed to the housing 13. Thus, the second sun gear 29 is not allowed to rotate.

The second planetary gear set 20 comprises a fourth sun gear 37, at least one sixth planetary gear 38, at least one third planetary gear 39, at least one fifth planetary gear 40, a second carrier member 41, and a third sun gear 42. The fourth sun gear 37 is also formed on the first rotary shaft 30 on an opposite side of the second sun gear 29 across the first sun gear 24, and is rotated integrally with the first rotary shaft 30.

The second carrier member 41 is also a plate member, and the second carrier member 41 is connected to the first carrier member 28 to form a carrier 23 that is rotated around the first rotary shaft 30. Specifically, the one end 31a of the first pinion shaft 31 is supported by the first carrier member 28, and other end 31b of the first pinion shaft 31 is supported by the second carrier member 41. Optionally, the first carrier member 28 and the second carrier member 41 may be connected to each other at its outer circumferential portions through a connection member (not shown).

The sixth planetary gear 38 is also fitted onto the first pinion shaft 31 while being meshed with the fourth sun gear 37, and the sixth planetary gear 38 is rotated integrally with the first pinion shaft 31. Thus, the carrier 23 supports the first planetary gear 25, the second planetary gear 26, the sixth planetary gear 38, and the third planetary gear 39 in such a manner as to revolve around the first rotary shaft 30.

Specifically, the other end 31b of the first pinion shaft 31 is supported by a third supporting section 44 of the second carrier member 41. The third planetary gear 39 is also fitted onto the first pinion shaft 31, and the fifth planetary gear 40 is interposed between the third planetary gear 39 and the third sun gear 42. Specifically, a third pinion shaft 45 is supported by a fourth supporting section 46 of the second carrier member 41, and the fifth planetary gear 40 is fitted onto the third pinion shaft 45 while being meshed with the third planetary gear 39 and the third sun gear 42. As described, the first pinion shaft 31 and the third pinion shaft 45 may be supported by the third supporting section 44 and the fourth supporting section 46 of the second carrier member 41 not only rotatably but also fixedly. The third sun gear 42 is situated coaxially with the first rotary shaft 30. Specifically, a second rotary shaft 47 extends coaxially with the first rotary shaft 30 toward outside of the housing 13 to be joined with the output shaft 17, and the third sun gear 42 is formed on the second rotary shaft 47. The output shaft17 penetrates through the housing 13 to transmit torque between the second rotary shaft 47 and the output member 12, and as described, the output shaft17 is supported by the second bearing 22.

According to the first embodiment, all of the gears of the first planetary gear set 19 and the second planetary gear set 20 are external gears. That is, an internal gear is not used in the compound planetary gear assembly 15. According to the first embodiment, therefore, a manufacturing cost of the compound planetary gear assembly 15 may be reduced and the compound planetary gear assembly 15 may be downsized in a radial direction.

In addition, lubricating oil 48 is also held in the housing 13 to cool and lubricate the compound planetary gear assembly 15. For example, the lubricating oil 48 is held in the housing 13 in an amount possible to be splashed by a rotation of the gears of the compound planetary gear assembly 15.

In the compound planetary gear assembly 15, a power applied to the input shaft 16 is delivered to the first sun gear 24 and the fourth sun gear 37. The power delivered to the first sun gear 24 is distributed to the first planetary gear set 19, and a rotational speed derived from the power thus distributed to the first planetary gear set 19 is reduced by the first planetary gear set 19. That is, torque is multiplied by the first planetary gear set 19. The torque thus multiplied by the first planetary gear set 19 is applied to the sixth planetary gear 38 and further delivered to the output shaft 17. In other words, an input power to the input shaft 16 is delivered to the output shaft 17 while being increased. That is, the first planetary gear set 19 establishes a reaction torque against a torque of the second planetary gear set 20.

The first carrier member 28 may also be arranged between the first planetary gear 25 and the second planetary gear 26, and the second carrier member 41 may also be arranged between the sixth planetary gear 38 and the third planetary gear 39. Optionally, an intermediate carrier member (not shown) may be arranged between the first planetary gear 25 and the second planetary gear 26. In this case, a supporting section may be formed in the intermediate carrier member to support the second pinion shaft 34. Likewise, the intermediate carrier member may also be arranged between the sixth planetary gear 38 and the third planetary gear 39. In this case, a supporting section may be formed in the intermediate carrier member to support the third pinion shaft 45.

In the compound planetary gear assembly 15, a rotational direction of the output shaft 17 with respect to a rotational direction of the input shaft 16 is governed by combinations of numbers of gear teeth. Specifically, a rotational direction of the third sun gear 42 is switched between a rotational direction of the first sun gear 24 and a counter direction.

A final reduction rate $\alpha$ of compound planetary gear assembly 15 is a rate of a rotational speed of the third sun gear 42 with respect to a rotational speed of the first sun gear 24 given that the rotational speed of the first sun gear 24 is "1". Such final reduction rate $\alpha$ of the geared transmission unit 10 can be calculated using the below listed formula (1). In order to calculate the final reduction rate $\alpha$ of the geared transmission unit 10, a final carrier reduction rate $\beta$ is calculated using the below listed formula (2), a reduction rate $\beta1$ of the first planetary carrier of the first planetary gear set 19 is calculated using the below listed formula (3), a reduction rate $\beta2$ of the second planetary carrier of the second planetary gear set 20 is calculated using the below listed formula (4), a first ring reduction rate $\alpha1$ of the first planetary gear set 19 is calculated using the below listed formula (5), and a second ring reduction rate $\alpha2$ of the second planetary gear set 20 is calculated using the below listed formula (6).

Specifically, the first ring reduction rate $\alpha1$ is a rate of a rotational speed of the fourth planetary gear 27 with respect to a rotational speed of the first sun gear 24 given that the rotational speed of the first sun gear 24 is "1". The reduction rate $\beta1$ is a rate of a rotational speed of the first carrier member 28 with respect to a rotational speed of the first sun gear 24 given that the rotational speed of the first sun gear 24 is "1", and that the first carrier member 28 is rotated separately from the second carrier member 41. The second ring reduction rate $\alpha2$ is a rate of a rotational speed of the fifth planetary gear 40 with respect to a rotational speed of the fourth sun gear 37 given that the rotational speed of the fourth sun gear 37 is "1". The reduction rate $\beta2$ is a rate of a rotational speed of the second carrier member 41 with respect to a rotational speed of the fourth sun gear 37 given that the rotational speed of the fourth sun gear 37 is "1", and the second carrier member 41 is rotated separately from the first carrier member 28. The final carrier reduction rate $\beta$ is a reduction rate to be achieved by integrating the first carrier member 28 with the second carrier member 41, and may be calculated by subtracting the reduction rate $\beta1$ from the reduction rate $\beta2$.

In the formula (5), Zr1 is a number of teeth of the first sun gear 24, Zr2-1 is a number of teeth of the first planetary gear 25, Zr2-2 is a number of teeth of the second planetary gear 26, and Zr3 is a number of teeth of the second sun gear 29. In the formula (6), ZR1 is a number of teeth of the fourth sun gear 37, ZR2-1 is a number of teeth of the sixth planetary gear 38, ZR2-2 is a number of teeth of the third planetary gear 39, and ZR3 is a number of teeth of the third sun gear 42. Since a number of teeth of the fourth planetary gear 27 and a number of teeth of the fifth planetary gear 40 will not affect a speed ratio, those numbers of teeth of the fourth planetary gear 27 and the fifth planetary gear 40 are not employed in the formulas (5) and (6).

$$\alpha = \beta \, (\alpha2 + 1) \qquad\qquad (1)$$

$$\beta = \beta2 - \beta1 \qquad\qquad (2)$$

$$\beta1 = 1 \, / \, (1 + (1 \, / \, \alpha1)) \qquad\qquad (3)$$

$$\beta2 = 1 / (1 + (1 / \alpha2)) \tag{4}$$

$$\alpha1 = (Zr1 / ZR2\text{-}1) \cdot (ZR2\text{-}2 / Zr3) \tag{5}$$

$$\alpha2 = (ZR1 / ZR2\text{-}1) \cdot (Zr2\text{-}2 / Zr3) \tag{6}$$

(Example)

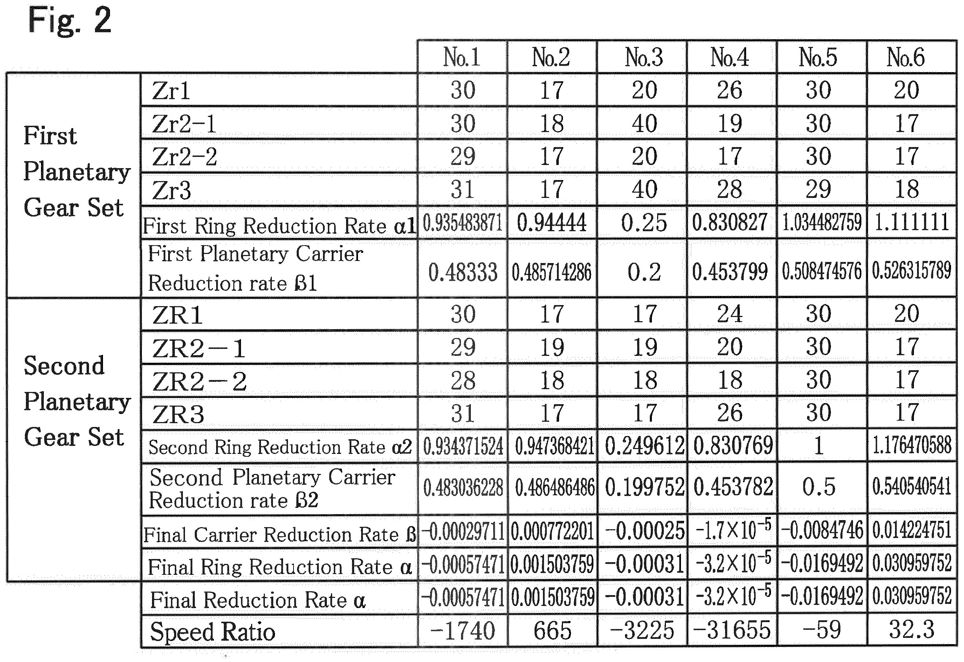

An example of numbers of the gears of the compound planetary gear assembly 15 is indicated in a table shown in Fig. 2. There are countless combinations of the numbers of the gears to achieve a reduction ratio of the compound planetary gear assembly 15 within a predetermined range. The inventor of the present disclosure carried out a simulation to achieve the reduction ratio of the compound planetary gear assembly 15 within the predetermined range, and a result of the simulation is indicated in Fig. 2. Specifically, the reduction ratio of the compound planetary gear assembly 15 is a value of an inverse number of the final reduction rate $\alpha$.

In the example No. 1, the number of teeth $Zr1$ of the first sun gear 24 was set to 30, the number of teeth $Zr2\text{-}1$ of the first planetary gear 25 was set to 30, the number of teeth $Zr2\text{-}2$ of the second planetary gear 26 was set to 29, the number of teeth $Zr3$ of the second sun gear 29 was set to 31, the number of teeth $ZR1$ of the fourth sun gear 37 was set to 29, the number of teeth $ZR2\text{-}1$ of the sixth planetary gear 38 was set to 29, the number of teeth $ZR2\text{-}2$ of the third planetary gear 39 was set to 28, and the number of teeth $ZR3$ of the third sun gear 42 was set to 31. In the example No. 1, the final reduction rate $\alpha$ was approximately - 0.00057471, and the reduction ratio of the compound planetary gear assembly 15 was approximately -1740. Given that the final reduction rate $\alpha$ and the reduction ratio ($1/\alpha$) are negative, this means that the output shaft 17 is rotated in the direction opposite to a rotational direction of the input shaft 16.

In the example No. 2, the number of teeth $Zr1$ of the first sun gear 24 was set to 17, the number of teeth $Zr2\text{-}1$ of the first planetary gear 25 was set to 18, the number of teeth $Zr2\text{-}2$ of the second planetary gear 26 was set to 17, the number of teeth $Zr3$ of the second sun gear 29 was set to 17, the number of teeth $ZR1$ of the fourth sun gear 37 was set to 17, the number of teeth $ZR2\text{-}1$ of the sixth planetary gear 38 was set to 19, the number of teeth $ZR2\text{-}2$ of the third planetary gear 39 was set to 18, and the number of teeth $ZR3$ of the third sun gear 42 was set to 17. In the example No. 2, the final reduction rate $\alpha$ was approximately 0.001503759, and the reduction ratio of the compound planetary gear assembly 15 was approximately 665.

In the example No. 3, the number of teeth $Zr1$ of the first sun gear 24 was set to 20, the number of teeth $Zr2\text{-}1$ of the first planetary gear 25 was set to 40, the number of teeth $Zr2\text{-}2$ of the second planetary gear 26 was set to 20, the number of teeth $Zr3$ of the second sun gear 29 was set to 40, the number of teeth $ZR1$ of the fourth sun gear 37 was set to 17, the number of teeth $ZR2\text{-}1$ of the sixth planetary gear 38 was set to 19, the number of teeth $ZR2\text{-}2$ of the third planetary gear 39 was set to 18, and the number of teeth $ZR3$ of the third sun gear 42 was set to 17. In the example No. 3, the final reduction rate $\alpha$ was approximately -0.00031, and the reduction ratio of the compound planetary gear assembly 15 was approximately -3225.

In the example No. 4, the number of teeth $Zr1$ of the first sun gear 24 was set to 26, the number of teeth $Zr2\text{-}1$ of the first planetary gear 25 was set to 19, the number of teeth $Zr2\text{-}2$ of the second planetary gear 26 was set to 17, the number of teeth $Zr3$ of the second sun gear 29 was set to 28, the number of teeth $ZR1$ of the fourth sun gear 37 was set to 24, the number of teeth $ZR2\text{-}1$ of the sixth planetary gear 38 was set to 20, the number of teeth $ZR2\text{-}2$ of the third planetary gear 39 was set to 18, and the number of teeth $ZR3$ of the third sun gear 42 was set to 26. In the example No. 4, the final reduction rate $\alpha$ was approximately "$-3.2 \cdot 10^{-5}$", and the reduction ratio of the compound planetary gear assembly 15 was approximately -31655. According to the first embodiment shown in Fig. 1, in the case of the example No. 4, a reduction ratio higher than that of the below-explained second embodiment can be achieved by differentiating the number of teeth $Zr1$ of the first sun gear 24, the number of teeth $Zr2\text{-}1$ of the first planetary gear 25, the number of teeth $ZR1$ of the fourth sun gear 37, and the number of teeth $ZR2\text{-}1$ of the sixth planetary gear 38.

In the example No. 5, the number of teeth $Zr1$ of the first sun gear 24 was set to 30, the number of teeth $Zr2\text{-}1$ of the first planetary gear 25 was set to 30, the number of teeth $Zr2\text{-}2$ of the second planetary gear 26 was set to 30, the number of teeth $Zr3$ of the second sun gear 29 was set to 29, the number of teeth $ZR1$ of the fourth sun gear 37 was set to 30, the number of teeth $ZR2\text{-}1$ of the sixth planetary gear 38 was set to 30, the number of teeth $ZR2\text{-}2$ of the third planetary gear 39 was set to 30, and the number of teeth $ZR3$ of the third sun gear 42 was set to 30. In the example No. 2, the final reduction rate $\alpha$ was approximately -0.0169492, and the reduction ratio of the compound planetary gear assembly 15 was approximately -59.

In the example No. 6, the number of teeth $Zr1$ of the first sun gear 24 was set to 20, the number of teeth $Zr2\text{-}1$

of the first planetary gear 25 was set to 17, the number of teeth Zr2-2 of the second planetary gear 26 was set to 17, the number of teeth Zr3 of the second sun gear 29 was set to 18, the number of teeth ZR1 of the fourth sun gear 37 was set to 20, the number of teeth ZR2-1 of the sixth planetary gear 38 was set to 17, the number of teeth ZR2-2 of the third planetary gear 39 was set to 17, and the number of teeth ZR3 of the third sun gear 42 was set to 17. In the example No. 6, the final reduction rate $\alpha$ was approximately 0.030959752, and the reduction ratio of the compound planetary gear assembly 15 was approximately 32.3.

Thus, in the geared transmission 10, a high reduction ratio approximately 32000 may be achieved as the case of example No. 4 by combining the first planetary gear set 19 with the second planetary gear set 20, in spite of small numbers of gear teeth.

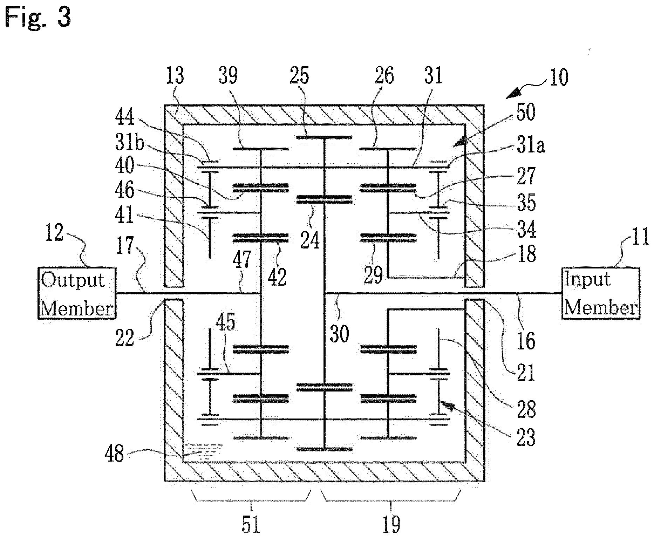

Turning to Fig. 3, there is shown a cross-section of a compound planetary gear assembly 50 according to the second embodiment as a modification of the first embodiment. According to the second embodiment, the sixth planetary gear 38 of the second planetary gear set 20 and the fourth sun gear 37 are omitted to downsize the compound planetary gear assembly 50 in the axial direction of the input shaft 16.

As shown in Fig. 3, the first planetary gear set 19 also comprises the first sun gear 24, at least one first planetary gear 25, at least one second planetary gear 26, at least one fourth planetary gear 27, the first carrier member 28, and the second sun gear 29.

A second planetary gear set 51 comprises at least one third planetary gear 39, at least one fifth planetary gear 40, the second carrier member 41, and the third sun gear 42. The third planetary gear 39 is supported by the first pinion shaft 31 to be rotated integrally with the first planetary gear 25. As the first embodiment, the second planetary gear 26 is also supported by the first pinion shaft 31. One end 31a of the first pinion shaft 31 is supported by the first carrier member 28, and other end 31b of the first pinion shaft 31 is supported by the second carrier member 41. The first carrier member 28 and the second carrier member 41 are connected to each other through a connection member (not shown) to form a carrier 23. That is, the carrier 23 supports the first planetary gear 25, the second planetary gear 26, and the third planetary gear 39 in such a manner as to rotate integrally with the first pinion shaft 31, and to revolve around the first rotary shaft 30.

In Fig. 3, common reference numerals are allotted to the elements in common with those shown in Fig. 1, and detailed explanations for the common elements will be omitted. The first carrier member 28 may also be disposed between the first planetary gear 25 and the second planetary gear 26. The second carrier member 41 may also be disposed between the first planetary gear 25 and the third planetary gear 39. Optionally, an intermediate carrier member (not shown) may be arranged between the first planetary gear 25 and the second planetary gear 26. In this case, the second pinion shaft 34 may be supported by the intermediate carrier member. Likewise, the intermediate carrier member may also be arranged between the first planetary gear 25 and the third planetary gear 39. In this case, the third pinion shaft 45 may be supported by the intermediate carrier member. According to the second embodiment, a manufacturing cost of the compound planetary gear assembly 50 may be reduced by thus omitting the fourth sun gear 37 and the sixth planetary gear 38.

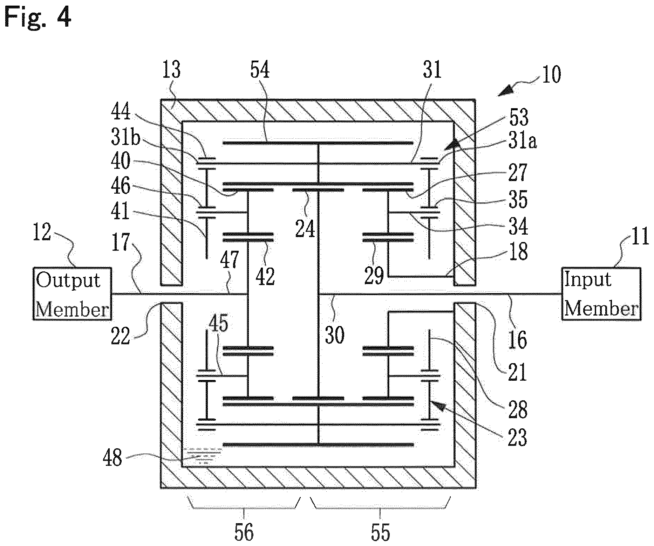

Turning to Fig. 4, there is shown a cross-section of a compound planetary gear assembly 53 according to the third embodiment as a modification of the second embodiment. According to the third embodiment, at least one long pinion gear 54 is employed instead of the first planetary gear 25, the second planetary gear 26, and the third planetary gear 39. A number of teeth of the long pinion gear 54 is equal to a total number of teeth of the first planetary gear 25, the second planetary gear 26, and the third planetary gear 39. As illustrated in Fig. 4, the long pinion gear 54 extends parallel to the input shaft 16. According to the third embodiment, therefore, the compound planetary gear assembly 53 may be assembled easily, and a manufacturing cost of the compound planetary gear assembly 53 may be reduced. For example, the reduction ratio of the compound planetary gear assembly 53 may be set to the reduction ratio according to the above-mentioned the example No. 5 in which the number of teeth Zr2-1 of the first planetary gear 25, the number of teeth Zr2-2 of the second planetary gear 26, the number of teeth ZR2-1 of the sixth planetary gear 38, and the number of teeth ZR2-2 of the third planetary gear 39 are equal to one another.

As illustrated in Fig. 4, the compound planetary gear assembly 53 comprises a first planetary gear set 55 and a second planetary gear set 56. The first planetary gear set 55 comprises the first sun gear 24, at least one long pinion gear 54, at least one fourth planetary gear 27, the first carrier member 28, and the second sun gear 29. The second planetary gear set 56 comprises at least one long pinion gear 54, at least one fifth planetary gear 40, the second carrier member 41, and the third sun gear 42. The long pinion gear 54 is supported by the first pinion shaft 31 while being meshed with the first sun gear 24, the fourth planetary gear 27, and the fifth planetary gear 40. In the compound planetary gear assembly 53, a plurality of the long pinion gears 54 are arranged around the first rotary shaft 30.

In the third embodiment, a portion of the long pinion gear 54 meshed with the fifth planetary gear 40 or the fifth planetary gear 40 serves as the second input element. Optionally, an intermediate carrier member (not shown) may be arranged between the first sun gear 24 and the fourth planetary gear 27. In this case, the second pinion shaft 34 may be supported by the intermediate carrier member. Likewise, the intermediate carrier member may also be arranged between the first sun gear 24 and the fifth planetary gear 40. In this case, the third pinion shaft 45 may be supported by the intermediate carrier member. In Fig. 4, common reference numerals are allotted to the elements in common with those shown in Fig. 1, and detailed explanations for the common elements will be omitted.

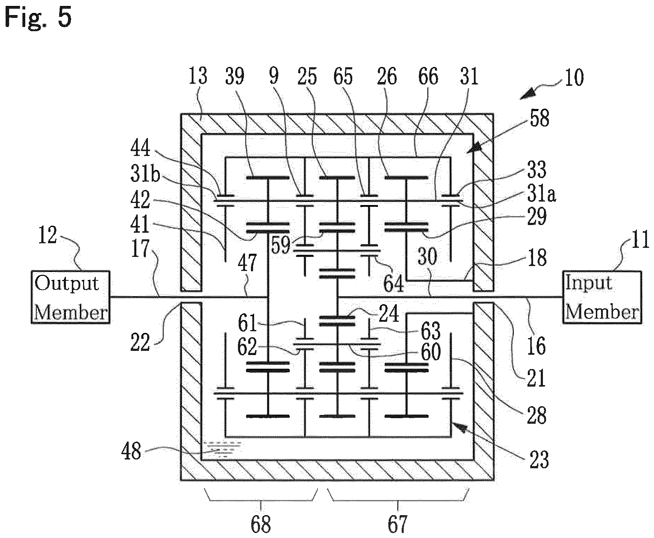

Turning to Fig. 5, there is shown a cross-section of a compound planetary gear assembly 58 according to the fourth embodiment as a modification of the second embodiment. According to the fourth embodiment, at least one sixth planetary gear 59 is employed to be meshed with the first sun gear 24 and the first planetary gear 25, instead of the fourth planetary gear 27 and the fifth planetary gear 40.

As illustrated in Fig. 5, the sixth planetary gear 59 is supported by a fourth pinion shaft 60 while being meshed with the first sun gear 24 and the first planetary gear 25. One end of the fourth pinion shaft 60 is supported by a fifth supporting section 62 of a first intermediate carrier member 61, and other end of the fourth pinion shaft 60 is supported by a sixth supporting section 64 of a second intermediate carrier member 63. A seventh supporting section 9 for supporting the first pinion shaft 31 is formed in the first intermediate carrier member 61 in a radially outer side of the fifth supporting section 62.

An eighth supporting section 65 for supporting the first pinion shaft 31 is also formed in the second intermediate carrier member 63 in a radially outer side of the sixth supporting section 64. The first carrier member 28, the first intermediate carrier member 61, the second intermediate carrier member 63, and the second carrier member 41 are connected to one another through a connection member 66 extending in a radially outermost side in the housing 13, and rotated integrally around a rotational axis of the input shaft 16.

The second planetary gear 26 is supported by the first pinion shaft 31 while being meshed with the second sun gear 29, and rotated integrally with the first planetary gear 25. The third planetary gear 39 is also supported by the first pinion shaft 31 while being meshed with the third sun gear 42, and also rotated integrally with the first planetary gear 25. The compound planetary gear assembly 58 comprises a first planetary gear set 67 and a second planetary gear set 68. The first planetary gear set 67 comprises the first sun gear 24, at least one sixth planetary gear 59, at least one first planetary gear 25, at least one second planetary gear 26, the first carrier member 28, and the second sun gear 29. The second planetary gear set 68 comprises at least one third planetary gear 39, the second carrier member 41, and the third sun gear 42. In the compound planetary gear assembly 58, any one of the first intermediate carrier member 61 and the second intermediate carrier member 63 may be omitted. In Fig. 5, common reference numerals are allotted to the elements in common with those shown in Fig. 1, and detailed explanations for the common elements will be omitted.

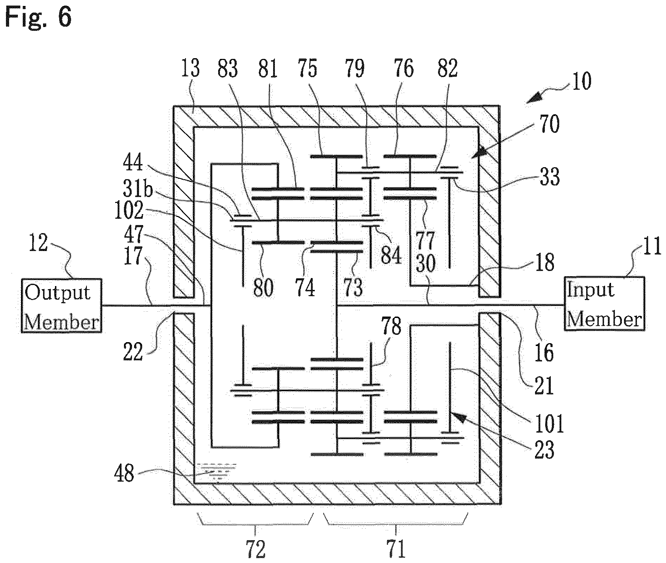

Turning to Fig. 6, there is shown a cross-section of a compound planetary gear assembly 70 according to the fifth embodiment as a modification of the first embodiment. According to the fifth embodiment, the compound planetary gear assembly 70 comprises a first planetary gear set 71 and a second planetary gear set 72, and only the first planetary gear set 71 is formed only of the external gears. Specifically, the first planetary gear set 71 comprises a fifth sun gear 73, at least one seventh planetary gear 74, at least one eighth planetary gear 75, at least one ninth planetary gear 76, a sixth sun gear 77, and a third carrier member 101. Torque of the first rotary shaft 30 is applied to the fifth sun gear 73, and the sixth sun gear 77 as a fixed element is joined to the fixed shaft 18.

The fifth sun gear 73 meshes with the seventh planetary gear 74, and the seventh planetary gear 74 meshes with the eighth planetary gear 75. The eighth planetary gear 75 and the ninth planetary gear 76 are supported by a fifth pinion shaft 82 to be rotated integrally with the fifth pinion shaft 82. One end of the fifth pinion shaft 82 is supported by the first supporting section 33 of the third carrier member 101, and other end of the fifth pinion shaft 82 is supported by a ninth supporting section 79 of a third intermediate carrier member 78. The ninth planetary gear 76 meshes with the sixth sun gear 77. The third intermediate carrier member 78 is disposed between the eighth planetary gear 75 and the ninth planetary gear 76, and rotated integrally with the first carrier member 28 around the first rotary shaft 30. The third carrier member 101 and the third intermediate carrier member 78 are included in the carrier 23.

The second planetary gear set 72 comprises at least one tenth planetary gear 80, and a first ring gear 81 as an internal gear. The first ring gear 81 as an output element is adapted to transmit torque to the second rotary shaft 47. The seventh planetary gear 74 and the tenth planetary gear 80 are supported by a sixth pinion shaft 83 to be rotated integrally with the sixth pinion shaft 83. One end of the sixth pinion shaft 83 is supported by the third supporting section 44 of a fourth carrier member 102, and other end of the sixth pinion shaft 83 is supported by a tenth supporting section 84 formed in the third intermediate carrier member 78 in a radially inner side of the ninth supporting section 79. The fourth carrier member 102 is rotated integrally with the third intermediate carrier member 78 around the axis of the first rotary shaft 30. The fourth carrier member 102 is also included in the carrier 23.

The first ring gear 81 is meshed with the tenth planetary gear 80 to transmit torque of the tenth planetary gear 80 to the second rotary shaft 47. The tenth planetary gear 80 may be connected to the second rotary shaft 47 not only directly but also indirectly. The fifth pinion shaft 82 and the sixth pinion shaft 83 may be offset from each other in the radial direction. Specifically, the sixth pinion shaft 83 is arranged in radially inner side of the fifth pinion shaft 82. In the compound planetary gear assembly 70, the first ring gear 81 may be arranged in a space between the sixth pinion shaft 83 and the fifth pinion shaft 82 so that the compound planetary gear assembly 70 is downsized in the radial direction even if the first ring gear 81 is used in the second planetary gear set 72. In Fig. 6, common reference numerals are allotted to the elements in common with those shown in Fig. 1, and detailed explanations for the common elements will be omitted.

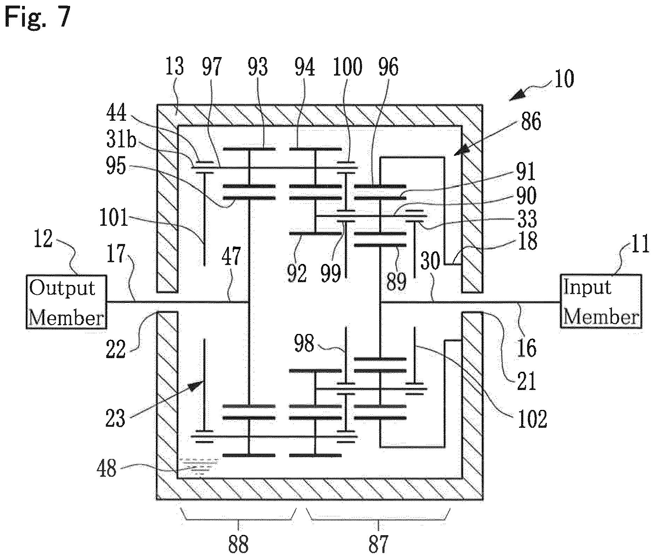

Turning to Fig. 7, there is shown a cross-section of a compound planetary gear assembly 86 according to the sixth embodiment as a modification of the first embodiment. According to the fifth embodiment, the compound planetary gear assembly 86 comprises a first planetary gear set 87 and a second planetary gear set 88. The second planetary gear set 88 comprises at least one seventh planetary gear 92, at least one eighth planetary gear 94, at least one ninth planetary gear 93, the third carrier member 101, and a sixth sun gear 95. Thus, only the external gears are used in the second planetary gear set 88. The sixth sun gear 95 as an output element is adapted to transmit torque to the second rotary shaft 47. The first planetary gear set 87 comprises a fifth sun gear 89, at least one tenth planetary gear 91, the fourth carrier member 102, a third intermediate carrier member 98, and a second ring gear 96. Torque of the first rotary shaft 30 is applied to the fifth sun gear 89, and the second ring gear 96 as a fixed element is joined to the fixed shaft 18.

The fifth sun gear 89 meshes with the tenth planetary gear 91, and the tenth planetary gear 91 meshes with the second ring gear 96. The second ring gear 96 is connected to the fixed shaft 18 to be fixed. The tenth planetary gear 91 is supported by a sixth pinion shaft 90.

The sixth pinion shaft 90 extends toward the output member 12 to support the tenth planetary gear 91 and the seventh planetary gear 92. That is, the tenth planetary gear 91 and the seventh planetary gear 92 are rotated integrally with the sixth pinion shaft 90. One end of the sixth pinion shaft 90 is supported by the first supporting section 33 of the fourth carrier member 102, and an intermediate portion of the sixth pinion shaft 90 between the tenth planetary gear 91 and the seventh planetary gear 92 is supported by an eleventh supporting section 99 of the third intermediate carrier member 98. The third intermediate carrier member 98 serves as a part of the carrier 23 and is rotated around the axis of the first rotary shaft 30.

The eighth planetary gear 94 and the ninth planetary gear 93 are supported by a fifth pinion shaft 97, and rotated integrally with the fifth pinion shaft 97. One end of the fifth pinion shaft 97 is supported by a twelfth supporting section 100 of the third intermediate carrier member 98, and other end of the fifth pinion shaft 97 is supported by the third supporting section 44 of the third carrier member 101. The ninth planetary gear 93 meshes with the sixth sun gear 95 that transmits torque to the second rotary shaft 47. The sixth sun gear 95 may be connected to the second rotary shaft 47 not only directly but also indirectly.

The fifth pinion shaft 97 and the sixth pinion shaft 90 may be offset from each other in the radial direction. Specifically, the sixth pinion shaft 90 is arranged in radially inner side of the fifth pinion shaft 97. In the compound planetary gear assembly 86, the second ring gear 96 may be arranged in a space between the fifth pinion shaft 97 and the sixth pinion shaft 90 so that the compound planetary gear assembly 86 is downsized in the radial direction. In Fig. 7, common reference numerals are allotted to the elements in common with those shown in Fig. 1, and detailed explanations for the common elements will be omitted.

Although the above exemplary embodiments of the present disclosure have been described, it will be understood by those skilled in the art that the present disclosure should not be limited to the described exemplary embodiments, and various changes and modifications can be made within the scope of the present disclosure. For example, the compound planetary gear assembly may also be used as a speed increasing gear unit by applying torque to the output member.

**Claims**

1. A compound planetary gear assembly (15, 50, 53, 58), **characterized by**:

    a first sun gear (24) to which torque is applied;
    a second sun gear (29) that is arranged coaxially with the first sun gear (24) and fixed not to rotate;
    a third sun gear (42) that rotates around a common rotational axis with the first sun gear (24) to output the torque while multiplying or reducing;
    a first planetary gear (25) to which the torque is delivered from the first sun gear (24);
    a second planetary gear (26) that delivers the torque to the second sun gear (29);
    a third planetary gear (39) that delivers the torque to the third sun gear (42);
    a first pinion shaft (31) that supports the first planetary gear (25), the second planetary gear (29) and the third planetary gear (39) in such a manner as to rotate integrally; and
    a carrier (23) that supports the first pinion shaft (31) and that rotates around a rotational axis of the first sun gear (29).

2. The compound planetary gear assembly (15, 50, 53, 58) as claimed in claim 1, wherein the carrier (23) supports both ends (31a, 31b) of the first pinion shaft (31).

**3.** The compound planetary gear assembly (15, 50, 53) as claimed in claim 2, further comprising:

a second pinion shaft (34) that is supported by the carrier (23) in a radially inner side of the first pinion shaft (31);
a fourth planetary gear (27) that is supported by the second pinion shaft (34) in a rotatable manner while being meshed with the second planetary gear (26) and the second sun gear (29);
a third pinion shaft (45) that is supported by the carrier (23) in the radially inner side of the first pinion shaft (31); and
a fifth planetary gear (40) that is supported by the third pinion shaft (45) in a rotatable manner while being meshed with the third planetary gear (39) and the third sun gear (42).

**4.** The compound planetary gear assembly (53), as claimed in any one of claims 1 to 3, wherein the first planetary gear (25), the second planetary gear (26), and the third planetary gear (39) are integrated to form a long pinion gear (54).

**5.** The compound planetary gear assembly (58) as claimed in claim 2, further comprising:

a sixth planetary gear (59) meshing with the first sun gear (24) and the first planetary gear (25),
wherein the sixth planetary gear (38) is supported by a fourth pinion shaft (60) in the radially inner side of the first pinion shaft (31), and
the fourth pinion shaft (60) is supported by the carrier (23).

**6.** The compound planetary gear assembly (15) as claimed in any one of claims 1 to 3, further comprising:

a fourth sun gear (37) that is arranged coaxially with the first sun gear (24) to be rotated integrally with the first sun gear (24); and
a sixth pinion gear (38) that is supported by the first pinion shaft (31) to be rotated integrally with the first pinion shaft (31) while being meshed with the fourth sun gear (37).

**7.** A compound planetary gear assembly (70, 86), comprising:

a fifth sun gear (73, 89) to which torque is applied;
a sixth sun gear (77, 95) that is arranged coaxially with the fifth sun gear (73, 89), and that serves as any one of a fixed element which is not allowed to rotate and an output element which outputs the torque while multiplying or reducing;
a ring gear (81, 96) that is arranged coaxially with the fifth sun gear (73, 89) to serve as other one of the fixed element and the output element;
a seventh planetary gear (74, 92) that is arranged radially outer side of the fifth sun gear (73, 89);
an eighth planetary gear (75, 94) that is arranged radially outer side of the seventh planetary gear (74, 92) to be meshed with the seventh planetary gear (74, 92);
a third carrier member (101) that supports the eighth planetary gear (75, 94) and a ninth planetary gear (76, 93) meshing with the sixth sun gear (77, 95) by a fifth pinion shaft (82, 97) such that the eighth planetary gear (75, 94) and the ninth planetary gear (76, 93) are rotated integrally;
a fourth carrier member (102) that supports the seventh planetary gear (74, 92) and a tenth planetary gear (80, 91) meshing with the ring gear (81, 96) by a sixth pinion shaft (83, 90) such that the seventh planetary gear (74, 92) and the tenth planetary gear (80, 91) are rotated integrally; and
an intermediate carrier member (78, 98) that supports the fifth pinion shaft (82, 97) and the sixth pinion shaft (83, 90) while offsetting in a radial direction,
wherein the fifth sun gear (73, 89) meshes with the seventh planetary gear (74, 92) or the tenth planetary gear (80, 91).

**8.** The compound planetary gear assembly (70) as claimed in claim 7,
wherein the sixth sun gear (77) serves as the fixed element,
the ring gear (81) serves as the output element, and
the fifth sun gear (73) meshes with the seventh planetary gear (74).

**9.** The compound planetary gear assembly (86) as claimed in claim 7,
wherein the sixth sun gear (95) serves as the fixed element,
the ring gear (96) serves as the output element, and
the fifth sun gear (89) meshes with the tenth planetary gear (91).

# Fig. 1

# Fig. 2

|  |  | No.1 | No.2 | No.3 | No.4 | No.5 | No.6 |
|---|---|---|---|---|---|---|---|
| First Planetary Gear Set | Zr1 | 30 | 17 | 20 | 26 | 30 | 20 |
|  | Zr2-1 | 30 | 18 | 40 | 19 | 30 | 17 |
|  | Zr2-2 | 29 | 17 | 20 | 17 | 30 | 17 |
|  | Zr3 | 31 | 17 | 40 | 28 | 29 | 18 |
|  | First Ring Reduction Rate $\alpha 1$ | 0.935483871 | 0.94444 | 0.25 | 0.830827 | 1.034482759 | 1.111111 |
|  | First Planetary Carrier Reduction rate $\beta 1$ | 0.48333 | 0.485714286 | 0.2 | 0.453799 | 0.508474576 | 0.526315789 |
| Second Planetary Gear Set | ZR1 | 30 | 17 | 17 | 24 | 30 | 20 |
|  | ZR2-1 | 29 | 19 | 19 | 20 | 30 | 17 |
|  | ZR2-2 | 28 | 18 | 18 | 18 | 30 | 17 |
|  | ZR3 | 31 | 17 | 17 | 26 | 30 | 17 |
|  | Second Ring Reduction Rate $\alpha 2$ | 0.934371524 | 0.947368421 | 0.249612 | 0.830769 | 1 | 1.176470588 |
|  | Second Planetary Carrier Reduction rate $\beta 2$ | 0.483036228 | 0.486486486 | 0.199752 | 0.453782 | 0.5 | 0.540540541 |
|  | Final Carrier Reduction Rate $\beta$ | -0.00029711 | 0.000772201 | -0.00025 | $-1.7 \times 10^{-5}$ | -0.0084746 | 0.014224751 |
|  | Final Ring Reduction Rate $\alpha$ | -0.00057471 | 0.001503759 | -0.00031 | $-3.2 \times 10^{-5}$ | -0.0169492 | 0.030959752 |
|  | Final Reduction Rate $\alpha$ | -0.00057471 | 0.001503759 | -0.00031 | $-3.2 \times 10^{-5}$ | -0.0169492 | 0.030959752 |
|  | Speed Ratio | -1740 | 665 | -3225 | -31655 | -59 | 32.3 |

EP 3 473 887 A2

EP 3 473 887 A2

## Fig. 3

# Fig. 4

# Fig. 5

Fig. 6

Fig. 7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017201637 A

- JP 2008275112 A